(19) Europäisches Patentamt
European Patent Office
Office européen des brevets

(11) **EP 1 105 353 B1**

(12) **FASCICULE DE BREVET EUROPEEN**

(45) Date de publication et mention
de la délivrance du brevet:
**17.03.2004 Bulletin 2004/12**

(51) Int Cl.[7]: **C02F 11/08**, C02F 1/36,
C02F 1/461, B01J 3/00,
B01J 19/10, B01J 19/00

(21) Numéro de dépôt: **99929461.4**

(22) Date de dépôt: **09.07.1999**

(86) Numéro de dépôt international:
**PCT/FR1999/001682**

(87) Numéro de publication internationale:
**WO 2000/002821 (20.01.2000 Gazette 2000/03)**

(54) **DISPOSITIF DE TRANSFORMATION DE STRUCTURES CHIMIQUES DANS UN FLUIDE COMPRENANT UN SOLVANT ET DES SELS SOUS L'ACTION DES ULTRASONS**

VORRICHTUNG ZUR UMWANDLUNG VON CHEMISCHEN STRUKTUREN IN EINER EIN LÖSUNGSMITTEL UND SALZE ENTHALTENDEN FLÜSSIGKEIT UNTER EINWIRKUNG VON ULTRASCHALL

DEVICE FOR TRANSFORMING CHEMICAL STRUCTURES IN A FLUID COMPRISING A SOLVENT AND SALTS BY ULTRASONIC ACTION

(84) Etats contractants désignés:
**AT BE CH CY DE DK ES FI FR GB GR IE IT LI LU MC NL PT SE**

(30) Priorité: **10.07.1998 FR 9808924**

(43) Date de publication de la demande:
**13.06.2001 Bulletin 2001/24**

(73) Titulaires:
• **L'ELECTROLYSE**
**33360 Latresne (FR)**
• **Sentagnes, Dominique**
**33000 Bordeaux (FR)**

(72) Inventeurs:
• **SENTAGNES, Dominique**
**F-33000 Bordeaux (FR)**

• **AYMONIER, Cyril**
**F-25330 Fertans (FR)**
• **BERDEU, Bernard**
**F-33140 Villenave d'Ornon (FR)**
• **CANSELL, François**
**F-33600 Pessac (FR)**

(74) Mandataire: **Audier, Philippe André et al
c/o Société de Protection des Inventions,
3, rue du Docteur Lancereaux
75008 Paris (FR)**

(56) Documents cités:
**EP-A- 0 535 320          EP-A- 0 832 852
DE-A- 4 416 785          US-A- 4 793 919
US-A- 4 822 497          US-A- 5 013 366**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

# Description

La présente invention concerne un dispositif de transformation de structures chimiques, c'est-à-dire un dispositif pour réaliser des réactions chimiques dans un fluide sous pression et en température, notamment un fluide supercritique, dans lequel ledit fluide comprend un solvant et au moins un sel et est soumis à l'action des ultrasons.

Le domaine de l'invention peut, de manière générale, être défini comme celui des transformations chimiques, réalisées dans un milieu fluide sous pression et en température, notamment en milieu supercritique. En effet, les fluides supercritiques, en particulier, présentent l'avantage de permettre de mieux contrôler le procédé de transformation, du fait de la mise en oeuvre d'un système monophasé au contraire de la plupart des procédés classiques qui mettent en oeuvre des systèmes polyphasés.

La plupart des procédés réalisés en milieu fluide sous pression et en température, notamment en milieu supercritique présente l'inconvénient de nécessiter, pour mener à bien les transformations et réactions, l'introduction dans le milieu supercritique de divers réactifs, additifs et espèces actives, la plupart du temps depuis l'extérieur de l'enceinte où se déroule la réaction en milieu sous pression et en température, notamment en milieu supercritique. L'introduction de ces composés nécessite des dispositifs souvent encombrants et coûteux qui, en outre, ne permettent pas une répartition homogène des réactifs et autres, au sein du réacteur sous pression et en température, en particulier supercritique, et donc un contrôle optimal des réactions. C'est en particulier le cas dans les procédés dans lesquels est réalisée l'oxydation de substances en milieu aqueux, où l'air, nécessaire à la réaction est prélevé à pression atmosphérique, puis compressé et, enfin, injecté dans le milieu. La compression de l'air requiert des installations volumineuses et contribue, pour une part importante, au coût élevé du procédé. Par ailleurs, l'oxygène introduit se trouve sous forme moléculaire, et l'on sait que celui-ci est nettement moins actif que l'oxygène sous forme atomique.

De nombreux autres traitements oxydants en milieu fluide sous pression et en température et notamment en milieu supercritique - principalement dans l'eau - ont été étudiés et développés. On peut citer, à ce sujet, le document WO-A-81/00855 qui concerne le traitement de matériaux organiques dans de l'eau supercritique. Les produits obtenus, lors de ce traitement, sont essentiellement du monoxyde et du dioxyde de carbone. Ce document prévoit d'utiliser des métaux capteurs d'hydrogène (Ni, Mo, Co, Pd, Pt) et leurs oxydes, comme catalyseurs du traitement. Ces catalyseurs doivent, de nouveau, être introduits depuis l'extérieur du réacteur supercritique avec les inconvénients qui en découlent.

Des traitements, autres que les traitements mettant en jeu une oxydation en milieu supercritique, sont connus, par exemple, du document EP-A-0 157 339, qui décrit un procédé permettant de préparer des hydrocarbures, de préférence, saturés à partir de boues de station d'épuration ayant une teneur en eau de 80 à 98,5 %, par traitement de ces boues, à une température de 300 à 600°C et à une pression de 10 à 50 MPa (100 à 500 bars). Les boues, immédiatement après ce traitement à température et pression élevées, ou simultanément à ce traitement, subissent une hydrogénation avec addition d'hydrogène moléculaire, obligatoirement en présence d'un catalyseur. Là, encore, se posent les mêmes problèmes que ceux déjà indiqués plus haut, liés à l'introduction d'additifs extérieurs dans le milieu et à la faible réactivité de l'hydrogène, comme précédemment, de l'oxygène, moléculaire entraînant la présence obligatoire d'un catalyseur supplémentaire.

Le document US-A-5 118 447 concerne un procédé de dénitrification de composés azotés, en particulier, de nitrates et de nitrites présents dans de nombreux effluents aqueux industriels issus, par exemple, de l'industrie chimique, des industries du traitement de surface, des industries des explosifs et des munitions.

Dans ce procédé, il est encore nécessaire d'introduire, dans le milieu, des formates en tant que réducteur des nitrates et des nitrites, avant de se placer dans le domaine supercritique.

Afin de surmonter les problèmes mentionnés ci-dessus, c'est-à-dire d'éliminer les dispositifs volumineux et coûteux de réactifs et d'additifs, d'obtenir une réaction homogène et uniforme dans l'ensemble du volume du réacteur, et de générer des espèces actives plus efficaces, sans catalyseur, ont été développés des procédés dans lesquels l'additif, le réactif, ou l'espèce active essentielle sont générés in situ par voie électrochimique dans un milieu supercritique.

Ainsi, le document US-A-4 581 105 est il relatif à une cellule électrochimique contenant un électrolyte aqueux qui se trouve dans un état supercritique. L'électrolyte contient au moins une espèce dite « espèce électroactive », qui, lorsqu'un courant est appliqué aux électrodes, réagit pour donner des « produits électrochimiques » solubles dans le fluide supercritique.

Dans les compartiments anodique et cathodique, peuvent être générés, par exemple, de l'oxygène et de l'hydrogène.

Le document EP-A-0 535 320 concerne un procédé et un dispositif d'oxydation de substances inorganiques et organiques, en particulier, d'effluents aqueux, dans lesquels les effluents sont traités dans un réacteur supercritique comportant une zone d'électrolyse pour générer de l'oxygène.

Les procédés et dispositifs, qui génèrent des espèces actives par électrolyse en milieu supercritique, doivent être mis en oeuvre sur des effluents présentant déjà une conductivité suffisante, donc très chargés en sels, ou dans lesquels on rajoute des quantités importantes de sels pour leur communiquer la conductivité élevée adéquate. On retrouve alors les problèmes des procédés et dispositifs, décrits plus hauts, concernant l'introduction des additifs. De plus, la présence des sels provoque à forte concentration d'importants problèmes de précipitation et de corrosion dans les réacteurs supercritiques et dans l'ensemble de l'installation.

En outre, l'électrolyse requiert des dispositifs complexes et génère enfin des espèces réactives dont la réactivité n'est encore pas suffisante dans bien des cas.

L'utilisation d'ultrasons pour réaliser des réactions dans des fluides sous pression et en température a également été proposée dans la littérature.

Ainsi, le document US-A-4 793 919 concerne un procédé et un appareil pour l'oxydation de suspensions aqueuses de matières organiques à températures et pressions élevées en présence d'un gaz oxydant. L'appareil comprend un réacteur muni d'un mélangeur statique dans lequel circule la suspension aqueuse à traiter dans laquelle est introduit le gaz oxydant. Selon une forme de réalisation particulière de l'appareil, des ultrasons peuvent être utilisés pour accroître la réaction d'oxydation en décomposant les matières organiques déjà partiellement oxydées et en faisant exploser les bulles d'air.

A cet effet, une sonde à ultrasons peut être prévue dans la partie supérieure du réacteur. Les ultrasons peuvent être utilisés également dans une configuration à plusieurs réacteurs où à la sortie du mélangeur statique, les molécules organiques qui sont cassées subissent une nouvelle oxydation dans un réacteur situé en aval. La nature des réacteurs mis en oeuvre n'est pas précisée.

Ce document concerne spécifiquement un traitement d'oxydation impliquant de nouveau l'introduction depuis l'extérieur d'un réactif supplémentaire, à savoir d'un gaz oxydant. On se trouve confronté, de ce fait, aux mêmes problèmes que ceux qui ont déjà été mentionnés ci-dessus.

Le document EP-A-0 832 852 décrit un procédé de destruction par oxydation de substances nocives dans les eaux usées, les eaux de procédés industriels et les eaux de boissons, à l'aide de persulfate, à une température supérieure à 130°C et sous une pression supérieure à 1 bar, par exemple, 5 à 6 bars.

Les réactifs utilisés et leurs proportions sont détaillés dans les revendications 2 à 8 de ce document, l'agent oxydant utilisé peut comprendre, en outre, de l'eau oxygénée.

Une lessive basique, telle que du lait de chaux, peut être ajoutée à l'eau traitée pour maintenir le pH, on peut, en outre, utiliser un catalyseur.

Il est également indiqué dans ce document que des ultrasons peuvent être mis en oeuvre sans qu'aucune gamme de fréquences ne soit mentionnée.

Ce procédé et ce dispositif nécessitent obligatoirement l'addition d'au moins un réactif, en particulier, oxydant dans le réacteur, si bien que les mêmes problèmes que ceux déjà indiqués plus haut continuent de se poser.

Le document US-A-5 013 366 concerne un procédé pour éliminer un ou plusieurs polluants d'un substrat, dans lequel ce dernier est mis en contact avec un gaz dense à une pression supérieure ou égale à la pression critique.

On pilote ensuite le procédé entre les états liquides et supercritiques en faisant varier la température du fluide dense dans une série d'étapes mettant en oeuvre des températures au-dessus et au-dessous de la température critique du fluide dense.

Dans une forme de réalisation de ce procédé, l'action du fluide dense, lors du passage de l'état liquide à l'état supercritique, peut être accrue en utilisant de l'énergie ultrasonique.

Un réacteur sonochimique est également décrit dans ce document et comprend un récipient sous pression 62 muni d'un transducteur.

Le document DE-A-1 416 785 décrit un dispositif et un procédé pour extraire, en particulier, des composés organiques non polaires ou peu polaires à partir de matières solides.

Le procédé de ce document apporte une amélioration aux procédés d'extraction utilisant des gaz supercritiques, en combinant l'action de ceux-ci avec la mise en oeuvre d'ultrasons.

L'action des ultrasons sur les gaz denses à l'état supercritique, tels que l'éthane, l'éthylène, le propane, le propène, le trifluorométhane, le $N_2O$, le $SF_6$ et le $CO_2$, permet une extraction et une saturation complète et rapide des composés à extraire, grâce à l'agitation induite.

L'extraction de composés très peu solubles est ainsi rendue possible.

Le fluide est ensuite détendu et séparé en deux phases et le gaz récupéré.

Dans ce document, on ne réalise pas de transformation chimique de substances, mais une simple extraction de ces substances, à partir d'un substrat.

Il existe donc un besoin pour un dispositif de transformation de structures chimiques dans un milieu supercritique qui, entre autres, permet de générer in situ les espèces actives, sans introduction depuis l'extérieur de réactifs et additifs, et qui génère une réactivité très élevée, en particulier, supérieure à celle obtenue par électrolyse.

Il existe encore un besoin pour un dispositif de transformation de structures chimiques dans un milieu sous pression et en température, notamment supercritique qui soit simple, et permette le traitement de tout type de fluides, quelle que soit la conductivité et le contenu en sels.

Le but de la présente invention est donc de fournir un dispositif qui réponde, entre autres, à l'ensemble des besoins indiqués ci-dessus, qui ne présente pas les inconvénients, limitations, défauts et désavantages des procédés de l'art antérieur et qui résolve les problèmes posés par des procédés de l'art antérieur.

Ce but et d'autres encore sont atteints, conformément à l'invention par un dispositif pour réaliser la transformation d'au moins une structure chimique se trouvant dans un fluide sous pression et en température comprenant un solvant et au moins un sel, dans lequel ledit dispositif comprend un réacteur vertical, dit « réacteur réservoir » comprenant une première zone inférieure où le fluide est maintenu dans des premières conditions de température et de pression assurant une solubilité élevée du ou des sel(s) et une seconde zone supérieure dans laquelle ledit fluide est maintenu dans des deuxièmes conditions de température et de pression conduisant à une précipitation du ou des sel(s), ledit réacteur réservoir étant muni de moyens pour maintenir ledit fluide dans ladite première zone inférieure dans lesdites premières conditions de température et de pression, de moyens pour maintenir ledit fluide dans ladite deuxième zone supérieure dans lesdites deuxièmes conditions de température et de pression, de moyens pour générer des ultrasons, et de moyens pour former ledit fluide à la partie inférieure dudit réacteur réservoir.

De préférence, le dispositif, selon l'invention, comprend, en outre :

- un second réacteur, dit « réacteur tubulaire », muni de moyens pour maintenir le fluide dans des troisièmes conditions de température et de pression permettant d'atteindre le degré d'avancement de la transformation souhaitée et relié, de préférence, à la partie supérieure dudit réacteur réservoir.

De préférence, lesdites premières conditions de température et de pression sont des conditions souscritiques, lesdites deuxièmes conditions de température et de pression sont des conditions supercritiques, lesdites troisièmes conditions de température et de pression sont également des conditions supercritiques, éventuellement différentes des deuxièmes conditions de température et/ou de pression.

De préférence, dans ce qui précède et du fait que la pression doit, de préférence, être maintenue constante dans l'ensemble du dispositif, lesdites conditions de température et de pression ne diffèrent que par la température, la pression étant maintenue constante dans l'ensemble du dispositif, et étant, de préférence, une pression supérieure à la pression au point critique Pc. De ce fait, la pression étant constante, la température dans la zone supérieure est une température permettant une précipitation du ou des sel(s), la température dans la zone inférieure est une température assurant une solubilité élevée des sels et la troisième température dans le réacteur tubulaire est une température éventuellement différente desdites première et deuxième températures, mais, cependant, généralement supérieure à la deuxième température (généralement Tc).

Avantageusement, les effluents traités par un tel dispositif sont des effluents aqueux salins, et donc, ladite solubilité élevée du ou des sel(s) peut être définie comme étant de 1 à 10 g/l, tandis que ladite précipitation correspond à une solubilité généralement inférieure à 100 ppm.

Dans ce dispositif, les sels précipitent au fond du réacteur réservoir et sont éliminés par des moyens adéquats. Ces moyens peuvent, par exemple, consister en des moyens d'injection d'un flux ou courant de solvant pur, tel que de l'eau, exempt de sel dans la partie inférieure du réacteur et en des moyens pour évacuer le flux de solvant qui se charge de sel. L'élimination des sels précipités au fond du réacteur par rinçage ou lavage à l'aide d'un flux de solvant, tel que l'eau pure peut, de préférence, se faire en continu ou par cycles. L'élimination des sels est grandement favorisée par l'utilisation des ultrasons.

Il est à noter que, selon l'invention, la génération d'ultrasons dans le réacteur empêche l'adhésion des sels sur les parois du réacteur et favorise leur décantation.

De manière particulièrement avantageuse, des moyens pour soumettre le fluide à une électrolyse sont prévus dans la zone inférieure du réacteur réservoir.

Par fluide sous pression et en température, on entend, généralement, un fluide dont la température et la pression dans lesdites première, deuxième et troisième conditions de température et de pression, sont supérieures à ses pressions et températures normales, à savoir 25°C et 0,1 MPa (1 bar). Généralement, les conditions de température et de pression du fluide, dans le dispositif selon l'invention, qu'il s'agisse des première, deuxième, ou troisième conditions de température et de pression, seront de 50 à 600°C et de 0,5 à 60 MPa (5 à 600 bars). Les conditions opératoires de température et de pression dans lesquelles se trouve le fluide peuvent être définies en fonction de la ou des transformation(s) ou réaction(s) à réaliser. Il est à noter dans ce qui suit que les conditions supercritiques, définies par rapport aux pressions et températures au point critique : Pc et Tc, sont définies par rapport à l'ensemble du fluide. Ce dernier peut être constitué par un ensemble de réactifs, additifs et espèces actives, de ce fait dans le cas où le fluide est constitué d'un mélange complexe, les coordonnées critiques du fluide peuvent être mal connues. Toutefois, en première approximation, pour un tel fluide, on peut considérer que Pc et Tc du fluide sont très voisins des Pc et Tc du solvant majoritairement présent dans le fluide ou du mélange binaire, ternaire, etc., majoritairement présent dans le fluide, et on se référera alors aux coordonnées critiques dudit solvant pour définir le domaine supercritique.

On peut définir généralement, selon l'invention, trois domaines opératoires pour le fluide sous pression et en température :

- un domaine supercritique où la pression et la température sont, respectivement, supérieures à Pc et Tc ;

- un domaine souscritique pour lequel la phase liquide dense n'est pas en équilibre avec une phase gaz, c'est-à-dire tous les gaz sont dissous dans la phase liquide ;

- un domaine souscritique diphasique dans lequel une phase liquide et une phase gaz coexistent en équilibre.

Or, donc, dans toute la suite, le fluide « sous pression et en température » se trouvera généralement dans l'un des trois domaines définis plus haut.

A titre d'exemple, dans le cas où le fluide est un fluide aqueux, l'eau a un point critique défini par Tc = 374°C et Pc = 22,1 MPa, donc si l'on se place dans des conditions supercritiques, la pression du procédé sera supérieure à Pc et la température supérieure à 374°C.

Le dispositif de l'invention apporte une solution à l'ensemble des problèmes mentionnés plus haut et répond à tous les besoins indiqués ci-dessus.

Rappelons, tout d'abord, que les ultrasons sont des ondes élastiques dont la fréquence est comprise entre environ 15 kilohertz et plusieurs centaines de Mégahertz, en dessous de cette plage, on parle de sons audibles ou d'infrasons et, au-delà, on parle d'hypersons. Dans la plage de fréquences ultrasoniques, on définit également les ultrasons de puissance entre 20 kHz et 100 kHz et les ultrasons de haute fréquence entre 1 MHz et 10 MHz. On sait que la production des ultrasons résulte, généralement, de la transformation d'un champ électrique alternatif en une vibration mécanique par l'intermédiaire d'un convertisseur. Le fait de soumettre le fluide à l'action des ultrasons consiste donc, généralement, à transmettre cette vibration mécanique au fluide par une sonde sous la forme d'une onde acoustique. Sous l'action du champ acoustique appliqué, les molécules de liquide vibrent à partir de leur position principale et une pression acoustique se superpose à la pression hydrostatique du milieu. L'expression de la pression dans le milieu est la suivante :

$$P_T = P_H + P_A.\sin(2\pi ft)$$

$P_T$, $P_H$ et $P_A$ sont respectivement la pression dans le milieu à l'instant t, la pression hydrostatique du milieu et l'amplitude de l'onde acoustique, f est la fréquence et t représente le temps.

Lorsqu'une pression négative est appliquée au milieu ($P_A.\sin(2\pi ft) \ll 0$), la distance entre les molécules peut dépasser la distance moléculaire critique (distance au-delà de laquelle le liquide « se casse ») ; des vides ou cavités croissent jusqu'à ce que le maximum de pression négative soit atteint. Puis, au cours du cycle de compression ($P_A.\sin(2\pi ft) \gg 0$), les bulles implosent et libèrent une énergie considérable au milieu. La formation et l'activité des bulles représentent le phénomène de cavitation.

Dans le dispositif de l'invention, les ultrasons permettent ainsi de générer in situ des espèces actives. De ce fait, le dispositif de l'invention ne présente aucun des inconvénients liés à l'introduction de réactifs extérieurs pour la transformation chimique de l'espèce déjà présente dans le fluide sous pression et en température, notamment supercritique. Les espèces actives sont générées à relativement basse température. Les espèces actives générées sont, en outre, des espèces actives très réactives, notamment par rapport aux réactifs classiquement introduits - tels que l'oxygène moléculaire dans le cas de l'oxydation -, ou encore aux espèces actives générées par électrolyse. En effet, les espèces générées sous l'action des ultrasons sont, généralement, des espèces radicalaires dont la réactivité est extrêmement élevée, comparativement aux espèces ioniques et moléculaires.

De manière générale, l'utilisation des ultrasons permet d'obtenir un rendement supérieur à une même chimie sans les ultrasons.

L'interaction des ultrasons avec la matière, c'est-à-dire, dans le cas présent, avec le solvant et le ou les structure(s) chimique(s) est indirecte. En effet, on sait que ces ultrasons engendrent le phénomène de cavitation, lequel est une source d'énergie.

Ainsi, dans le cas où le solvant est de l'eau, l'action des ultrasons sur celle-ci, connue sous le nom de sonolyse, se produit, également en milieu sous pression et en température, notamment supercritique et, essentiellement, selon l'équation (1) suivante :

$$H_2O \rightarrow H° + OH° \qquad (1)$$

Outre la génération in situ d'espèces actives, généralement par décomposition du solvant, les ultrasons contribuent, de manière générale, à accroître globalement la réactivité du milieu, c'est-à-dire du fluide, en particulier du fluide supercritique, dans lequel se trouvent la ou les espèces chimiques à transformer. Par exemple, les ultrasons induisent une activation des réactions par rupture homolytique des liaisons des structures chimiques à traiter, ce qui permet d'opérer à relativement plus faible température et sans ajout de catalyseur.

Le dispositif selon l'invention est, en outre, extrêmement simple et fiable, puisqu'il ne requiert, en fait, que des moyens classiques (sondes) pour générer des ultrasons ainsi qu'un réacteur réservoir sous haute pression et haute température, de conception également très simple. Le dispositif selon l'invention peut s'appliquer à tout fluide sous pression et en température, notamment supercritique, quel qu'il soit, quel que soit son contenu en sels, en effet, au contraire de l'électrolyse, aucune condition de conductivité du fluide n'est requise, il n'est donc pas nécessaire que des sels soient présents à forte concentration dans le fluide ou soient ajoutés en surplus pour que le procédé puisse être mis en oeuvre. Les problèmes liés à la corrosion des appareils sont réduits.

En particulier, le dispositif selon l'invention concerne tout fluide se trouvant dans l'un des trois domaines de pression et de température défini ci-dessus, ou se trouvant nécessairement dans deux ou plus de ces domaines.

L'action des ultrasons se produit de manière homogène dans l'ensemble du fluide sous pression et en température, notamment du fluide supercritique, c'est-à-dire que les espèces réactives sont réparties de manière homogène, uniforme dans toute l'enceinte du réacteur contenant le fluide sous pression et en température, notamment le fluide supercritique et, de ce fait, les réactions mettant en jeu ces espèces, ou toutes les activations causées par les ultrasons se déroulent uniformément dans tout le réacteur et le rendement des réactions et transformations s'en trouve accru.

Cette action homogène et uniforme des ultrasons dans tout le fluide constitue un avantage supplémentaire du dispositif de l'invention vis-à-vis, par exemple, des dispositifs mettant en oeuvre une électrolyse ou l'activation du milieu et la génération d'espèces actives ne se produit qu'entre les électrodes et au voisinage de celles-ci.

Toute l'énergie ultrasonique dispersée dans le fluide est disponible pour activer celui-ci, et générer des espèces essentiellement radicalaires.

Selon l'invention, on utilise, généralement, des ultrasons d'une fréquence de 20 kHz à 1 Mhz et, de préférence, des ultrasons de puissance, c'est-à-dire dont la fréquence est de 20 kHz à 100 kHz, et on doit se placer, en outre, au-delà du seuil de cavitation défini par la fréquence, à partir de laquelle on observe le phénomène de cavitation.

La valeur du seuil de cavitation dépend notamment du solvant, de la viscosité du milieu, de la température, de la pression, de la forme du réacteur, mais peut être facilement déterminée par l'homme du métier.

Enfin, outre les avantages et effets auparavant cités plus haut, le dispositif selon l'invention présente tous les effets et avantages liés au fait de réaliser la réaction chimique dans un fluide sous pression et en température et notamment dans un fluide supercritique.

On sait que la première application commerciale des ultrasons remonte en 1917 et que l'efficacité de l'activation ultrasonique en chimie a été démontrée en 1927. Aujourd'hui, l'utilisation des ultrasons en chimie est connue sous la dénomination de « sonochimie ».

Les ultrasons sont ainsi utilisés dans les domaines de la dissolution, de l'homogénéisation, de l'émulsification et de l'extraction. Ils ont aussi été mis en oeuvre des applications liées au nettoyage, à la désinfection, ou encore à la stérilisation.

La mise en oeuvre des ultrasons, dans les milieux sous pression et en température, notamment les milieux supercritiques dans les conditions spécifiques mises en oeuvre dans le dispositif de l'invention, n'a, toutefois jusqu'à présent, jamais été ni mentionnée, ni suggérée.

Par structure chimique, on entend, généralement, selon l'invention, tout édifice chimique, c'est-à-dire toute association d'atomes ou de molécules, solide, liquide, ou gazeux.

Cette structure chimique peut être de nature organique, telle que, par exemple, des hydrocarbures, des alcools, des composés organochlorés, ou de nature inorganique, ou minérale, telle que, par exemple, des oxydes, des hydroxydes métalliques, il peut s'agir, en particulier, d'un sel.

Ce sel est choisi, par exemple, parmi les sels de cations de métaux et de métalloïdes avec un anion choisi parmi les chlorures, nitrate, acétate, sulfate, bromure, fluorure, carbonate, bicarbonate, etc. Ces sels sont, par exemple, les sels qui se trouvent dans les effluents rejetés par divers procédés industriels, tels que les nitrates, ou les sulfates.

Selon l'invention, grâce aux ultrasons, il n'est pas nécessaire que le fluide soumis à leur action contiennent des sels à concentration importante, au contraire des procédés qui mettent en jeu une électrolyse.

Dans le dispositif de l'invention le ou les sel(s) contenus dans le fluide, et/ou les sels formés lors du traitement sont facilement désagrégés par les ultrasons, ce qui évite leur accumulation et la corrosion induite.

En d'autres termes, l'utilisation des ultrasons permet de favoriser la précipitation des sels, empêche les gros agrégats et évite que les sels collent aux parois, ce qui facilite l'élimination des sels en continu ou en discontinu.

La transformation réalisée dans le dispositif de l'invention peut ne concerner qu'une seule de ces structures chimiques ou bien plusieurs de celles-ci. Ces structures chimiques peuvent être de nature différente, c'est-à-dire, par exemple, que la transformation, réaction, selon l'invention, peut simultanément concerner un ou plusieurs composé(s) organique(s) et/ou un ou plusieurs composé(s) minéral(aux), tel(s) que du(es) sel(s).

Par ailleurs, la ou les structure(s) chimique(s) affectée(s) par la transformation peut(vent) être également une(des) structure(s) chimique(s) faisant partie du solvant.

Par transformation chimique, ou réaction, on entend, généralement, dans le procédé de l'invention, toute modification affectant ladite structure chimique.

Il peut s'agir, par exemple, d'une dégradation de l'édifice moléculaire ou atomique de la ou desdites structure(s) chimique(s) en une ou plusieurs structure(s) chimique(s) avec un édifice moléculaire ou atomique plus simple, il peut aussi s'agir de l'interaction des différentes structures chimiques entre elles. Ces transformations peuvent être l'une quelconque ou plusieurs des réactions connues en chimie organique, ou minérale, telles que coupure, « lyse », condensation, addition, substitution, élimination, réduction, oxydation, etc.

Selon l'invention, le fluide comprend un solvant, ce solvant constitue l'essentiel du fluide et le ou les structure(s) chimique(s) se trouve(nt) généralement en solution ou en suspension dans ce solvant dans le cas, bien entendu, ou la ou lesdites structure(s) chimique(s) n'est (ne sont) pas le solvant lui-même.

Ce solvant est, généralement, choisi parmi les composés liquides ou gazeux dans les conditions normales de température et de pression.

Ainsi, le solvant peut il être, généralement, choisi parmi l'eau, les solvants organiques connus, liquides, dans les conditions normales de température et de pression, et leurs mélanges.

Le solvant peut ainsi être choisi parmi les alcanes liquides de 5 à 20 C, tel que le n-pentane, l'isopentane, l'hexane, l'heptane, l'octane ; les alcènes liquides de 5 à 20 C ; les alcynes liquides de 4 à 20 C ; les alcools, tels que le méthanol, l'éthanol ; les cétones, telles que l'acétone ; les éthers ; les esters ; les hydrocarbures chlorés et/ou fluorés liquides ; les solvants issus de coupes pétrolières, telles que le white spirit ; les autres solvants organiques ; et leurs mélanges.

Le solvant peut également être choisi parmi les composés gazeux dans les conditions normales de température et de pression et leurs mélanges parmi lesquels on peut citer le dioxyde de carbone, l'hélium, l'azote, le protoxyde d'azote, l'hexafluorure de soufre, les alcanes gazeux de 1 à 5 atomes de carbone ; méthane, éthane, propane, n-butane, isobutane, néopentane, les alcènes gazeux ayant de 2 à 4 atomes de carbone : acétylène, propyne et butyne-1 ; les diènes gazeux, tels que le propadiène ; les hydrocarbures chlorés et/ou fluorés gazeux, par exemple, les chlorofluorocarbures, dits « Fréon® » et encore dénommé CFC ou HCFC, etc., et leurs mélanges.

De manière préférée, le dispositif selon l'invention permet le traitement d'effluents aqueux et le solvant est donc de l'eau.

Lesdites troisièmes conditions de température et de pression élevées pour que la transformation atteigne un degré d'avancement souhaité sont, de préférence, des conditions de pression et de température supercritiques.

Ledit degré d'avancement souhaité peut correspondre soit à une transformation partielle, soit à une transformation totale.

Sous l'action des ultrasons, un certain nombre d'espèces réactives vont être générées dans le fluide, dont la plupart sont issues de la sonolyse ou décomposition du solvant.

Ainsi, si le solvant est - de manière préférée - de l'eau, l'interaction des ultrasons avec celle-ci va proposer la réaction suivante, décrite par l'équation (1) :

$$H_2O \rightarrow H° + OH° \qquad (1)$$

A partir de cette équation, un certain nombre de combinaisons est possible :

$$H° + O_2 \rightarrow HO_2° \qquad (2)$$

$$HO_2° + HO_2° \rightarrow H_2O_2 + O_2 \qquad (3)$$

$$OH° + OH° \rightarrow H_2O_2 \qquad (4)$$

$$H° + H° \rightarrow H_2 \qquad (5)$$

Par ailleurs, il se produit également une activation des réactions et des structures chimiques à traiter, sans catalyseur par coupure homolytique des liaisons C - C, C - OH, C - Cl, O - O, etc. Ces liaisons sont, par exemple, celles des structures chimiques, autres que le solvant se trouvant dans le fluide.

Ainsi, dans le cas d'un effluent aqueux, où le solvant est l'eau, ces structures chimiques seront les composés, organiques et/ou minéraux se trouvant dans les effluents, dont on souhaite, généralement, provoquer la dégradation.

Le dispositif selon l'invention fonctionne généralement sans l'ajout d'un quelconque réactif. Toutefois, dans certains cas, il peut s'avérer avantageux d'ajouter au fluide au moins un réactif supplémentaire, c'est-à-dire différent de la ou des structure(s) chimique(s) définie(s) plus haut du solvant et du ou des sels, ce réactif peut être choisi, par exemple, parmi les composés oxydants, tels que l'oxygène moléculaire, et le peroxyde d'hydrogène $H_2O_2$. L'action des ultrasons est, dans ce cas, avantageuse, en ce sens qu'elle entraîne une activation des espèces réactives et donc une diminution de la température de travail, ainsi qu'une diminution de la quantité d'oxydant à rajouter puisqu'il n'est plus nécessaire de travailler en surstoechiométrie.

Le réactif supplémentaire peut aussi être choisi parmi les composés réducteurs, tels que l'hydrogène moléculaire, l'hydrazine, le borohydrure de lithium, et le borohydrure de sodium, ces réactifs sont très coûteux et peu stables et l'action des ultrasons permet de limiter leur quantité au strict nécessaire avec les mêmes avantages que pour les oxydants et d'éviter l'utilisation de catalyseurs.

Par ailleurs, on peut, outre l'action des ultrasons, soumettre le fluide à une autre forme d'activation, par exemple, une électrolyse.

De manière préférée, selon l'invention, le solvant est l'eau, la(les) structure(s) chimique(s) est(sont) une(des) structure(s) dont on souhaite provoquer la dégradation en vue de leur destruction ou de leur transformation en produits susceptibles d'être utilisés dans l'industrie. Ces structures sont essentiellement des composés organiques, tels que des composés chlorés, des alcools, des hydrocarbures, notamment aromatiques,..., ou des composés minéraux, tels que des nitrates, etc.

Le fluide traité sera donc défini comme un effluent aqueux, chargé de composés organiques et/ou minéraux (ces composés organiques et/ou minéraux constituant les structures à transformer), qui peut être issu de l'industrie papetière, de l'industrie mécanique, par exemple, il peut s'agir de boues de désencrage de pâtes à papier ou d'huiles de coupe, etc.

Selon l'invention, un tel effluent pourra être traité plutôt en oxydation, c'est-à-dire que l'on génère in situ des espèces réactives, telles que $OH^\circ$, $H_2O_2$, $O_2$, qu'il se produit une activation des réactions par coupure homolytique des liaisons, telles que C - C, C - OH, C - Cl, 0 - 0, etc. ; ou plutôt en réduction avec formation de $H^\circ$ à partir de $H_2$ et, éventuellement, des réactifs supplémentaires ajoutés, par exemple, l'hydrazine, et ce, à basse température, avec activation des molécules à traiter, sans catalyseur ; et avec lyse des liaisons à basse température alors que cette lyse est réalisée classiquement à haute température. Les réactions impliquées sont, par exemple, les suivantes :

$$C - OH \rightarrow C^\circ + OH^\circ \qquad (6)$$

$$C - C \rightarrow C^\circ + C^\circ \qquad (7)$$

$$H2 \rightarrow H^\circ + H^\circ \qquad (8)$$

$$C^\circ + H^\circ \rightarrow C - H \qquad (9)$$

$$H^\circ + OH^\circ \rightarrow H_2O \qquad (10)$$

Les moyens pour former ledit fluide comprennent, généralement, des moyens pour introduire le solvant, la ou lesdites structure(s) chimique(s) le ou lesdits sel(s) et, éventuellement, la ou les réactif(s) supplémentaire(s). Lorsque le solvant, préalablement à l'introduction dans l'enceinte, comprend déjà la ou lesdites structure(s) chimique(s) et/ou le ou lesdits sel(s), lesdits moyens comprennent simplement des moyens d'introduction d'un courant de fluide unique dans ladite enceinte. Lesdits moyens d'introduction comprennent, généralement, une pompe ou autre, généralement une pompe à haute pression, qui sert également à maintenir le réacteur ou enceinte à une pression adéquate supérieure à la pression au point critique Pc.

Le dispositif, selon l'invention, comprend également des moyens pour amener ledit fluide dans les conditions de pression et de température désirées respectives, notamment supercritiques ; il est bien évident que ces moyens doivent être également aptes à maintenir lesdites conditions de pression et de température, notamment supercritiques, pendant une durée suffisante pour mener à bien les transformations et réactions souhaitées.

Ces moyens pour amener et maintenir le fluide, dans les conditions de température et de pression désirées respectives, par exemple supercritiques, peuvent, par exemple, comprendre, d'une part, des moyens pour assurer une pression dans le premier réacteur ou dans chacune de ses zones et, éventuellement, dans le second réacteur et, d'autre part, des moyens pour maintenir une température dans le premier réacteur ou enceinte ou dans chacune de ses zones et, éventuellement, dans le second réacteur.

Ces moyens peuvent, par exemple, comprendre une pompe haute pression destinée à pressuriser le ou les courant(s) de fluide avant qu'il(s) ne soit(ent) introduit(s) dans le réacteur réservoir et un échangeur de chaleur destiné à amener le ou les courant (s) de fluide dans le domaine de température voulu dans le réacteur réservoir ou enceinte.

L'échangeur de chaleur peut être prévu, par exemple, en aval de ladite pompe haute pression.

Lesdits moyens pour générer des ultrasons dans ledit fluide comprennent, généralement, un générateur, un convertisseur et au moins une sonde ultrasonique.

En effet, la production des ultrasons résulte, généralement, de la transformation d'un champ électrique alternatif en une vibration mécanique par l'intermédiaire d'un convertisseur. Cette vibration mécanique est transmise au fluide par au moins une sonde sous la forme d'une onde acoustique.

Si la sonde est unique, elle est généralement positionnée au centre de l'enceinte au sein du fluide traité.

Si plusieurs sondes doivent être mises en oeuvre, leur disposition dans l'enceinte ou réacteur est définie afin d'optimiser les phénomènes de cavitation et l'efficacité de la ou des réaction(s) souhaitée(s).

D'autres caractéristiques et avantages de l'invention ressortiront mieux de la description qui va suivre de modes de réalisation de l'invention donnés à titre illustratif et non limitatif en référence aux dessins joints dans lesquels :

- la figure 1 est une vue en coupe transversale schématique d'un dispositif selon l'invention conçu en particulier pour le traitement d'effluents aqueux salins ;
- la figure 2 est une vue en coupe transversale schématique d'un dispositif selon l'invention conçu en particulier pour le traitement d'effluents aqueux salins qui comporte, en outre, une zone d'électrolyse dans la partie inférieure.

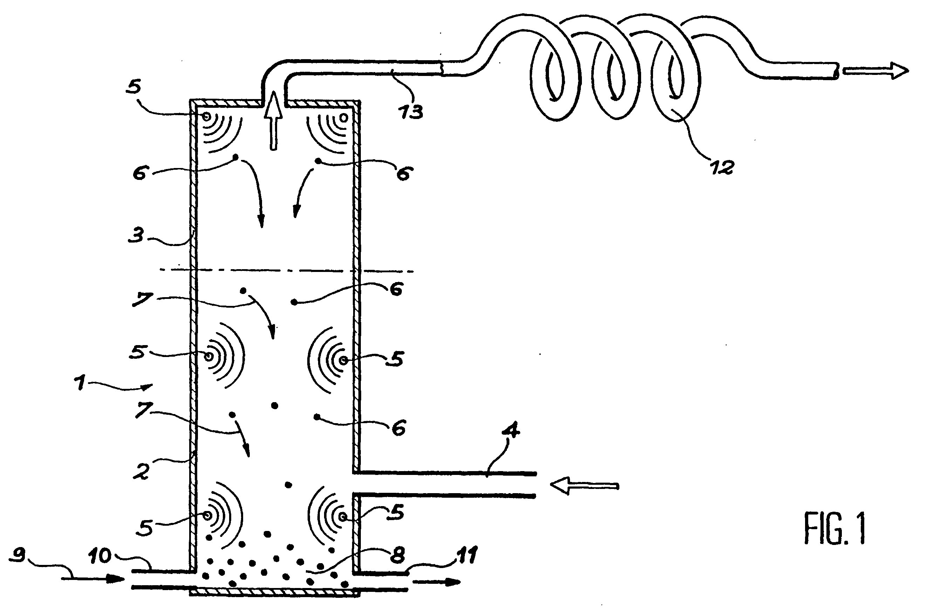

Le dispositif selon la figure 1 comprend un réacteur réservoir 1 dont l'ensemble de l'enceinte est porté à la même pression.

Le réacteur réservoir comprend une première zone inférieure 2 à une première température permettant la resolubilisation des sels et permettant donc aux sels de rester solubles dans le fluide jusqu'à saturation desdits sels. Pour des effluents aqueux, la solubilité dans la zone inférieure 2 est, par exemple, de 1 à 10 g/l. Le réacteur réservoir comprend une deuxième zone supérieure 3 a une deuxième température permettant la précipitation qui correspond à une très faible solubilité des sels : à savoir, par exemple, moins de 100 ppm.

L'effluent aqueux à traiter chargé, par exemple, de structures chimiques à dégrader et comportant au moins un sel est introduit dans la zone inférieure 2 du réacteur réservoir, par exemple, par l'intermédiaire d'une canalisation 4. L'effluent aura pu être, au préalable, mis en température et en pression au moyen d'une pompe, par exemple, haute pression (non représentée).

Il est soumis dans le réacteur réservoir à l'action des ultrasons générés, par exemple, par six sondes 5, qui, outre leur action de sonolyse (coupure des liaisons) empêchent l'adhérence des sels sur les parois du réservoir.

Les sels 6, qui précipitent 7, après saturation, et s'accumulent 8 dans le fond du réacteur réservoir, sont évacués en continu par un flux d'eau pure 9 injecté par la canalisation 10 qui les entraîne hors du réacteur par la canalisation 11 de lavage. On a représenté sur la figure 1 six sondes ultrasoniques réparties dans le réacteur, mais il est bien évident que le nombre de ces sondes peut être différent et qu'elles peuvent être réparties de manière différente, par exemple, elles peuvent se trouver uniquement dans la partie inférieure et/ou supérieure du réacteur réservoir.

Le dispositif, selon la figure 1, comprend, en outre, un réacteur tubulaire 12 relié à la partie supérieure du réacteur réservoir, par une canalisation 13. La pression dans ledit réacteur tubulaire est généralement identique à celle du réacteur réservoir, mais sa température, notamment supercritique, est de préférence supérieure à celle de la deuxième zone du réacteur réservoir.

Ce réacteur a pour but de pousser l'avancement de la transformation ou réaction jusqu'à une transformation partielle ou totale en vue, notamment, soit de dégrader totalement les structures chimiques se trouvant initialement dans l'effluent, soit d'obtenir des produits ciblés, « valorisables » tels que des hydrocarbures.

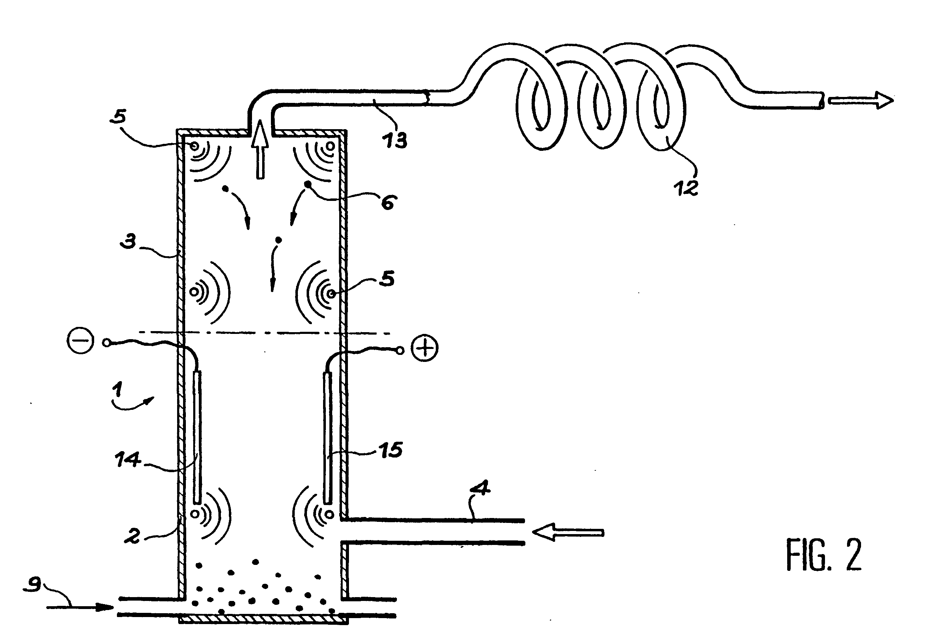

La figure 2, où les références utilisées sont les mêmes que celles de la figure 1, représente un dispositif semblable à celui de la figure 1 dans lequel il est prévu, en outre, des électrodes 14, 15 dans la zone inférieure du réacteur réservoir afin d'effectuer une électrolyse de l'eau dans cette zone inférieure et génère ainsi O$_2$ et H$_2$.

L'électrolyse de l'eau génère des espèces oxydantes et/ou réductrices dont l'activité est accrue par les ultrasons.

## Revendications

1.  Dispositif pour réaliser la transformation d'au moins une structure chimique se trouvant dans un fluide sous pression et en température comprenant un solvant et au moins un sel, dans lequel ledit dispositif comprend un réacteur vertical, dit "réacteur réservoir" comprenant une première zone inférieure où le fluide est maintenu dans des premières conditions de température et de pression assurant une solubilité élevée du ou des sel(s) et une seconde zcne supérieure dans laquelle ledit fluide est maintenu dans des deuxièmes conditions de température et de pression conduisant à une précipitation du ou des sel(s), ledit réacteur réservoir étant muni de moyens pour maintenir ledit fluide dans ladite première zone inférieure dans lesdites premières conditions de température et de pression, de moyens pour maintenir ledit fluide dans ladite deuxième zone supérieure dans lesdites deuxièmes conditions de température et de pression, de moyens pour générer des ultrasons, et de moyens pour former ledit fluide à la partie inférieure dudit réacteur réservoir ; la pression étant, en outre, maintenue constante dans l'ensemble du dispositif.

2.  Dispositif selon la revendication 1 comprenant, en outre, un second réacteur, dit « réacteur tubulaire » muni de moyens pour maintenir le fluide dans des troisièmes conditions de température et de pression permettant d'atteindre le degré d'avancement de la transformation souhaité.

3.  Dispositif selon l'une quelconque des revendications 1 et 2, dans lequel la température et la pression du fluide dans lesdites première, deuxième et troisième conditions de température et de pression sont supérieures aux pressions et températures normales.

4.  Dispositif selon l'une quelconque des revendications 1 et 2, dans lequel la pression et la température du fluide sont, respectivement, de 0,5 à 60 MPa et de 50 à 600°C.

5.  Dispositif selon l'une quelconque des revendications 1 et 2, dans lequel ledit fluide sous pression et en température se trouve dans l'un des trois domaines opératoires suivants :

    -    un domaine supercritique où la pression et la température sont, respectivement, supérieures à la pression critique et à la température critique du fluide ;

- un domaine souscritique dans lequel la phase liquide dense n'est pas en équilibre avec une phase gaz et dans lequel tous les gaz sont dissous dans la phase liquide ;

- un domaine souscritique diphasique dans lequel une phase liquide et une phase gaz coexistent en équilibre.

6. Dispositif selon la revendication 1, dans lequel lesdits ultrasons sont des ultrasons de puissance dont la fréquence est de 20 kHz à 1 MHz.

7. Dispositif selon la revendication 1, dans lequel ledit solvant est choisi parmi les composés liquides ou gazeux dans les conditions normales de température et de pression.

8. Dispositif selon la revendication 7, dans lequel le solvant est choisi parmi l'eau, les alcanes liquides de 5 à 20 C, les alcènes liquides de 5 à 20 C, les alcynes liquides de 4 à 20 C, les alcools, les éthers, les esters, les hydrocarbures chlorés et/ou fluorés liquides, les solvants issus de coupes pétrolières, les autres solvants organiques et leurs mélanges.

9. Dispositif selon la revendication 7, dans lequel le solvant est choisi parmi le dioxyde de carbone, l'hélium, l'azote, le protoxyde d'azote, l'hexafluorure de soufre, les alcanes gazeux de 1 à 5 atomes de carbone, les alcanes gazeux de 2 à 4 atomes de carbone, les diènes gazeux, les hydrocarbures chlorés et/ou fluorés gazeux et leurs mélanges.

10. Dispositif selon l'une quelconque des revendications 1 à 9, dans lequel on ajoute au fluide au moins un réactif supplémentaire.

11. Dispositif selon la revendication 10, dans lequel ledit réactif supplémentaire est choisi parmi les composés oxydants, tels que l'oxygène moléculaire et le peroxyde d'hydrogène.

12. Dispositif selon la revendication 10, dans lequel ledit réactif supplémentaire est choisi parmi les composés réducteurs, tels que l'hydrogène moléculaire, l'hydrazine, le borohydrure de lithium et le borohydrure de sodium.

13. Dispositif selon l'une quelconque des revendications 1 à 12, dans lequel lesdites premières conditions de température et de pression sont des conditions souscritiques, lesdites deuxièmes conditions de température et de pression sont des conditions supercritiques et, éventuellement, lesdites troisièmes conditions de température et de pression sont des conditions supercritiques, éventuellement différentes desdites deuxièmes conditions de température et de pression.

14. Dispositif selon la revendication 1, dans lequel des moyens pour soumettre le fluide à une électrolyse sont prévus dans la zone inférieure du réacteur réservoir.

15. Dispositif selon la revendication 1 ou la revendication 2, dans lequel ledit degré d'avancement souhaité correspond à une transformation totale.

16. Dispositif selon la revendication 1 ou la revendication 2, dans lequel ledit degré d'avancement souhaité correspond à une transformation partielle.

**Patentansprüche**

1. Vorrichtung zum Durchführen der Umwandlung wenigstens einer chemischen Struktur, die sich in einem Fluid unter Druck und auf Temperatur befindet, das ein Lösungsmittel sowie wenigstens ein Salz enthält, wobei die Vorrichtung einen vertikalen Reaktor umfaßt, genannt "Reservoirreaktor", umfassend eine erste untere Zone, in der das Fluid bei ersten Temperatur- und Druckbedingungen gehalten wird, die eine erhöhte Löslichkeit des Salzes oder der Salze sicherstellen, sowie eine zweite obere Zone, in der das Fluid bei zweiten Temperatur- und Druckbedingungen gehalten wird, die zu einer Fällung des Salzes oder der Salze führen, wobei der Reservoirreaktor mit Mitteln zum Halten des Fluids in der ersten unteren Zone bei den ersten Temperatur- und Druckbedingungen ausgestattet ist, ferner mit Mitteln zum Halten des Fluids in der zweiten oberen Zone bei den zweiten Temperatur- und Druckbedingungen, ferner mit Mitteln zum Erzeugen von Ultraschall sowie mit Mitteln zum Bilden des Fluids im unteren Bereich des Reservoirreaktors, wobei der Druck ferner in der gesamten Vorrichtung konstant gehalten wird.

2. Vorrichtung nach Anspruch 1, ferner umfassend einen zweiten Reaktor, genannt "Röhrenreaktor", der mit Mitteln zum Halten des Fluids bei dritten Temperatur- und Druckbedingungen ausgestattet ist, die es ermöglichen, den gewünschten Fortschrittsgrad der Umwandlung zu erreichen.

3. Vorrichtung nach einem der Ansprüche 1 und 2, bei der die Temperatur und der Druck des Fluids bei den ersten, zweiten und dritten Temperatur- und Druckbedingungen größer als die Normaldrücke und -temperaturen sind.

4. Vorrichtung nach einem der Ansprüche 1 und 2, bei der der Druck und die Temperatur des Fluids von 0,5 bis 60 MPa bzw. von 50 bis 600°C betragen.

5. Vorrichtung nach einem der Ansprüche 1 und 2, bei der das Fluid unter Druck und auf Temperatur sich in einem der drei folgenden Arbeitsbereiche befindet:

   - einem superkritischen Bereich, in dem der Druck und die Temperatur jeweils größer als der kritische Druck bzw. die kritische Temperatur des Fluids sind;
   - einem unterkritischen Bereich, in dem die dichte flüssige Phase nicht im Gleichgewicht mit einer Gasphase ist, und in dem alle Gase in der flüssigen Phase gelöst sind;
   - einem unterkritischen Zweiphasenbereich, in dem eine flüssige Phase und eine Gasphase im Gleichgewicht koexistieren.

6. Vorrichtung nach Anspruch 1, bei der die Ultraschallwellen Leistungs-Ultraschallwellen sind, deren Frequenz zwischen 20 kHz und 1 MHz liegt.

7. Vorrichtung nach Anspruch 1, bei der das Lösungsmittel aus den bei den normalen Temperatur- und Druckbedingungen flüssigen oder gasförmigen Verbindungen ausgewählt ist.

8. Vorrichtung nach Anspruch 7, bei der das Lösungsmittel ausgewählt ist aus Wasser, den flüssigen Alkanen mit 5 bis 20 C, den flüssigen Alkenen mit 5 bis 20 C, den flüssigen Alkynen mit 4 bis 20 C, den Alkoholen, den Äthern, den Esthern, den flüssigen Chlor- und/oder Fluorkohlenwasserstoffen, den aus Erdölfraktionen gewonnenen Lösungsmitteln, den anderen organischen Lösungsmitteln sowie ihren Mischungen.

9. Vorrichtung nach Anspruch 7, bei der das Lösungsmittel ausgewählt ist aus Kohlendioxyd, Helium, Stickstoff, Stickstoffoxyd, Schwefelhexafluorid, den gasförmigen Alkanen mit 1 bis 5 Kohlenstoffatomen, den gasförmigen Alkanen mit 2 bis 4 Kohlenstoffatomen, den gasförmigen Dienen, den gasförmigen Chlorund/oder Fluorkohlenwasserstoffen sowie ihren Mischungen.

10. Vorrichtung nach einem der Ansprüche 1 bis 9, bei der man dem Fluid wenigstens ein zusätzliches Reagens hinzufügt.

11. Vorrichtung nach Anspruch 10, bei der das zusätzliche Reagens ausgewählt ist aus den oxydierenden Verbindungen wie z. B. molekularer Sauerstoff und Wasserstoffperoxyd.

12. Vorrichtung nach Anspruch 10, bei der das zusätzliche Reagens ausgewählt ist aus den reduzierenden Verbindungen wie z. B. molekularer Wasserstoff, Hydrazin, Lithiumborhydrid und Natriumborhydrid.

13. Vorrichtung nach einem der Ansprüche 1 bis 12, bei der die ersten Temperatur- und Druckbedingungen unterkritische Bedingungen sind, die zweiten Temperatur- und Druckbedingungen superkritische Bedingungen sind, und ggf. die dritten Temperatur- und Druckbedingungen superkritische Bedingungen sind, die ggf. von den zweiten Temperatur- und Druckbedingungen verschieden sind.

14. Vorrichtung nach Anspruch 1, bei der in der unteren Zone des Reservoirreaktors Mittel vorgesehen sind, um das Fluid einer Elektrolyse zu unterziehen.

15. Vorrichtung nach Anspruch 1 oder Anspruch 2, bei der der gewünschte Fortschrittsgrad einer vollständigen Umwandlung entspricht.

16. Vorrichtung nach Anspruch 1 oder Anspruch 2, bei der der gewünschte Fortschrittsgrad einer partiellen Umwandlung entspricht.

**Claims**

1. Device for bringing about the conversion of at least one chemical structure present in a fluid under pressure and at temperature comprising a solvent and at least one salt, in which said device comprises a vertical reactor, called a "reservoir reactor" containing a first lower zone in which the fluid is maintained under first conditions of temperature and pressure ensuring high solubility of the salt or salts, and a second upper zone in which said fluid is maintained under second conditions of temperature and pressure leading to a precipitation of the salt or salts, said reservoir reactor being equipped with means to maintain said fluid in said first lower zone under said first conditions of temperature and pressure, means for maintaining said fluid in said second upper zone under said second conditions of temperature and pressure, means for generating ultrasound, and means for forming said fluid in the lower part of said reservoir reactor, the pressure also being kept constant throughout the device.

2. Device according to claim 1, also comprising a second reactor, called a "tubular reactor" equipped with means for maintaining the fluid under third conditions of temperature and pressure with which it is possible to reach the desired stage of advancement of the conversion.

3. Device according to either of claims 1 and 2, in which the temperature and the pressure of the fluid under said first, second and third conditions of temperature and pressure are greater than normal pressures and temperatures.

4. Device according to either of claims 1 and 2, in which the pressure and temperature of the fluid are, respectively, from 0.5 to 60 MPa and from 50 to 600°C.

5. Device according to either of claims 1 and 2, in which said fluid under pressure and at temperature is in one of the following operating domains:

   - a supercritical domain in which the pressure and temperature are, respectively, greater than the critical pressure and the critical temperature of the fluid;
   - a subcritical domain in which the dense liquid phase is not in equilibrium with a gas phase, and in which all the gases are dissolved in the liquid phase;
   - a diphase subcritical domain in which a liquid phase and a gas phase coexist in equilibrium.

6. Device according to claim 1, in which said ultrasounds are power ultrasounds whose frequency is from 20 KHz to 1 MHz.

7. Device according to claim 1, in which said solvent is chosen from among the liquid and gaseous compounds under normal conditions of temperature and pressure.

8. Device according to claim 7, in which the solvent is chosen from among water, liquid alkanes with 5 to 20 C, liquid alkenes with 5 to 20 C, liquid alkynes with 4 to 20 C, alcohols, ethers, esters, liquid chlorine- and/or fluorine-containing hydrocarbons, solvents derived from petroleum cracking, the other organic solvents and their mixtures.

9. Device according to claim 7, in which the solvent is chosen from among carbon dioxide, helium, nitrogen, nitrous oxide, sulphur hexafluoride, gaseous alkanes with 1 to 5 carbon atoms, gaseous alkanes with 2 to 4 carbon atoms, gaseous dienes, gaseous chlorine- and/or fluorine-containing hydrocarbons and their mixtures.

10. Device according to any of claims 1 to 9, in which at least one additional reagent is added to the fluid.

11. Device according to claim 10, in which said additional reagent is chosen from among the oxidizing compounds, such as molecular oxygen and hydrogen peroxide.

12. Device according to claim 10, in which said additional reagent is chosen from among the reducing compounds, such as molecular hydrogen, hydrazine, lithium borohydride and sodium borohydride.

13. Device according to any of claims 1 to 12, in which said first conditions of temperature and pressure are subcritical conditions, said second conditions of temperature and pressure are supercritical conditions and, optionally, said third conditions of temperature and pressure are supercritical conditions, optionally different from said second conditions of temperature and pressure.

14. Device according to claim 1, in which means for submitting the fluid to an electrolysis are provided in the lower zone of the reservoir reactor.

15. Device according to claim 1 or claim 2, in which said desired stage of advancement corresponds to a full conversion.

16. Device according to claim 1 or claim 2, in which said desired stage of advancement corresponds to a partial conversion.

FIG.1

FIG. 2